# EUROPÄISCHE PATENTANMELDUNG

(11) **EP 2 116 867 A2**
(43) Veröffentlichungstag der Anmeldung: **11.11.2009**
(21) Anmeldenummer: 08007360.4
(22) Anmeldetag: 15.04.2008
(51) Int. Cl.: G01S 17/10, G02B 6/30, G02B 6/28

(54) **Optischer Sensor**

(71) Anmelder: Pepperl + Fuchs GmbH, 68307 Mannheim (DE)
(72) Erfinder: Klar, Ulrich, 12159 Berlin (DE)
(74) Vertreter: Schiffer, Axel Martin

(57) **Zusammenfassung**

Die Erfindung betrifft einen optischen Sensor zum Nachweis von Objekten in einem Überwachungsbereich, mit einer Sendeeinheit (13) zum Aussenden von Licht, mit einer Empfangseinheit (25) zum Empfangen von Licht, mit einer Sendeoptik (16) zum Leiten von Licht in den Überwachungsbereich, mit einer Empfangsoptik (22) zum Leiten von aus dem Überwachungsbereich (19) kommendem Licht auf die Empfangseinheit. Der optische Sensor ist **dadurch gekennzeichnet, dass** die Sendeoptik und/oder die Empfangsoptik zum Verbinden von optischen Komponenten mindestens eine optische Kupplung (10,11) aufweist, dass die optische Kupplung einen aus einem ersten Kunststoffmaterial gebildeten Kupplungskörper aufweist, an oder in dem mindestens ein Lichtleitbereich und Anschlussbereiche für anzuschließende Komponenten gebildet sind, und dass in den Kupplungskörper an einer ersten Formseite ein erstes Vertiefungsprofil eingeprägt ist, welches zum Bilden der Lichtleitbereiche wenigstens teilweise mit einem transparenten zweiten Kunststoffmaterial verfüllt ist.

## Beschreibung

Die vorliegende Erfindung betrifft einen optischen Sensor nach dem Oberbegriff des Anspruchs 1.

Gattungsgemäße optische Sensoren zum Nachweis von Objekten in einem Überwachungsbereich sind für eine Vielzahl von Anwendungen bekannt und weisen folgende Komponenten auf: eine Sendeeinheit zum Aussenden von Licht, eine Empfangseinheit zum Empfangen von Licht, eine Sendeoptik zum Leiten von Licht in den Überwachungsbereich und eine Empfangsoptik zum Leiten von aus dem Überwachungsbereich kommendem Licht auf die Empfangseinheit.

Beispielsweise kann es sich um Lichttaster, Triangulationssensoren, Reflexionslichtschranken oder auch um elektrooptische Entfernungsmessgeräte nach dem Laufzeitprinzip handeln.

Optische Kupplungen sind beispielsweise aus dem Bereich der Telekommunikation bekannt und weisen einen Kupplungskörper auf, an oder in dem mindestens ein Lichtleitbereich und Anschlussbereiche für anzuschließende Komponenten gebildet sind.

Bei elektrooptischen Entfernungsmessgeräten, insbesondere solchen, bei denen eine Pulslaufzeit zur Entfernungsbestimmung herangezogen wird, werden aus dem Laserstrahlengang Referenzpulse ausgekoppelt, die im Vergleich zu den Messpulsen eine geringere Höhe aufweisen, in ihrer Pulsform ansonsten aber möglichst gut mit den Messpulsen übereinstimmen sollen.

Bei diesem Prinzip der Distanzmessung sendet eine gepulste Laserdiode für jede Messung eine Abfolge gleicher Pulse aus. Die Laserleistung wird in zwei Fasern eingekoppelt, wobei typischerweise 80% der Leistung auf einen Hauptkanal und 20% der Leistung auf einen Referenzkanal entfallen. Das Licht im Hauptkanal wird sodann auf ein Zielobjekt gerichtet und von dort zurückreflektiert. Durch Vergleich des reflektierten Strahls mit dem Referenzstrahl kann auf die Zeitdauer für den Hin- und Rückweg des Lichts und hierüber auf die Distanz des Zielobjekts geschlossen werden. Eine Präzisierung der Ergebnisse kann dabei erzielt werden, wenn über die Ergebnisse der Pulsfolge gemittelt wird.

Hierzu sollten die Mess- und die Referenzpulse möglichst dieselbe Verteilung von Lichtmoden enthalten. Diesem Aspekt kommt besondere Bedeutung zu, da üblicherweise Laserdioden als Lichtquellen verwendet werden, die über ihre aktive Fläche im Allgemeinen inhomogen abstrahlen. Um eine homogenere Verteilung der Lichtmoden zu erzielen, werden üblicherweise Diffusoren oder lange, konventionelle Lichtwellenleiter eingesetzt. Durch eine Vielzahl von Reflexionen kommt es dabei zur gewünschten Modemmischung. Zum Ein- und Auskoppeln der Laserstrahlung, beispielsweise von zusätzlichen Lichtquellen, werden im Stand der Technik bisher Strahlteiler eingesetzt. Hierbei handelt es sich um mechanisch behandelte, beispielsweise geeignet angeschliffene Glasfasern, die miteinander verklebt werden.

Um vergleichbare Pulse zu erhalten, werden bei elektrooptischen Entfernungsmessgeräten, die eine Pulslaufzeit auswerten, die Messpulse üblicherweise definiert abgeschwächt, wobei hierfür bisher häufig eine aufwendige mechanische Blende, insbesondere ein auf einem drehbaren Rad angeordnetes Verlaufsfilter eingesetzt werden. Eine Formung des Strahls ist bisher nur mit erheblichem mechanischem und optischem Aufwand möglich, wobei auch hier beispielsweise Glasfasern verwendet werden.

Die erwähnten Diffusoren erzielen aber nur sehr eingeschränkt die gewünschte Wirkung der Modenmischung und der Prozess ist auch für eine Serienfertigung nur sehr eingeschränkt reproduzierbar.

Weiterhin ist der Einsatz von Strahlteilern als auch von anderen Lichtwellenleiter-Lösungen sehr teuer. Lediglich in sehr großen Stückzahlen eingesetzte Typen können zu vertretbaren Preisen bezogen werden. Die dabei zum Einsatz kommenden Glasfasern eignen sich aber nur sehr eingeschränkt für den Bau der oben erwähnten optischen Entfernungsmessgeräte. Sodann sind die üblicherweise eingesetzten Blenden relativ aufwendig und ebenfalls teuer. Darüber hinaus sind die benötigten Blenden nur schwer zu beschaffen.

Schließlich ist eine Strahlformung mit Hilfe von Glasfasern nur jeweils durch gezielte Fertigung dieser Glasfasern in Handarbeit möglich, was ebenfalls hohe Kosten nach sich zieht.

Als eine Aufgabe der Erfindung kann angesehen werden, einen optischen Sensor zum Nachweis von Objekten in einem Überwachungsbereich zu schaffen, bei welchem für die Sendeoptik und/oder die Empfangsoptik ein vereinfachter und/oder kostengünstigerer Aufbau erzielt wird.

Diese Aufgabe wird erfindungsgemäß durch den optischen Sensor mit den Merkmalen des Anspruchs 1 gelöst.

Der optische Sensor der oben angegebenen Art ist erfindungsgemäß dadurch weitergebildet, dass die Sendeoptik und/oder die Empfangsoptik zum Verbinden von optischen Komponenten mindestens eine optische Kupplung aufweist, dass die optische Kupplung einen aus einem ersten Kunststoffmaterial gebildeten Kupplungskörper aufweist, an oder in dem mindestens ein Lichtleitbereich und Anschlussbereiche für anzuschließende Komponenten gebildet sind, und dass in dem Kupplungskörper an einer ersten Formseite ein erstes Vertiefungsprofil eingeprägt ist, welches zum Bilden der Lichtleitbereiche wenigstens teilweise mit einem transparenten zweiten Kunststoffmaterial verfüllt ist.

Bei einem Verfahren zur Herstellung einer solchen optischen Kupplung wird in eine Formseite einer ersten Halbschale aus einem ersten thermoplastischen Kunststoff mit einem Prägewerkzeug thermisch ein Vertiefungsprofil eingeprägt. Weiterhin wird zum Bilden der Lichtleitbereiche das Vertiefungsprofil wenigstens teilweise mit einem transparenten zweiten thermoplastischen Kunststoffmaterial verfüllt. Außerdem wird die Formseite der ersten Halbschale wenigstens teilweise mit einer zweiten Halbschale abgedeckt.

Gemäß einem weiteren Aspekt der Erfindung wird die optische Kupplung zum Leiten von analogen Lichtsignalen bei elektrooptischen Entfernungsmessgeräten, insbesondere nach dem Laufzeitprinzip, verwendet.

Bevorzugte Ausgestaltungen des optischen Sensors sind Gegenstand der abhängigen Ansprüche und werden außerdem in der folgenden Beschreibung, insbesondere mit Bezug auf die beigefügten Figuren, erläutert.

Als erster Kerngedanke der Erfindung kann angesehen werden, für die spezifische Aufgabenstellung bei optischen Sensoren und insbesondere bei elektrooptischen Entfernungsmessgeräten, die eine Pulslaufzeit auswerten, zur Ein- und Auskopplung von Licht und insbesondere zur Modenmischung nicht mehr hochwertige optische Komponenten, sondern ein gezielt für die vorliegenden Bedürfnisse geschaffenes Massenprodukt zu verwenden.

Als weiterer Kerngedanke der Erfindung kann erachtet werden, als einfache Fertigungstechnik für die einzusetzenden optischen Kupplungen ein Prägeverfahren einzusetzen.

Überraschenderweise können hierbei Grenzflächen erreicht werden, welche so strukturiert sind, dass im Hinblick auf die Durchmischung der einzelnen Lasermoden besonders gute Eigenschaften erzielt werden.

Als erster wesentlicher Vorteil der Erfindung kann angesehen werden, dass mit der Prägetechnik auch variable Prägetiefen möglich sind. Damit können Strukturen geschaffen werden, die sich beispielsweise in zwei Dimensionen verjüngen. Hierdurch kann die Einkoppeleffizienz und die Variabilität der Strahlformung deutlich verbessert werden. Damit zusammenhängend besteht ein weiterer Vorteil darin, dass eine echte zweidimensionale Strahlformung möglich ist. Beispielsweise kann ein im Einkoppelbereich zunächst rechteckiges Strahlprofil auf runde Strahlprofile im Bereich der Auskopplung überführt werden.

Insgesamt wird mit der vorliegenden Erfindung ein optischer Sensor mit einer optischen Kupplung bereitgestellt, welche besonders einfach und kostengünstig herzustellen ist und bei der außerdem im Hinblick auf die Modenmischung besonders gute Eigenschaften erzielt werden.

Bei der Sendeeinheit kann es sich grundsätzlich um beliebige Strahlungs- oder Lichtquellen handeln. Besonders bevorzugt werden Leuchtdioden oder Laserdioden eingesetzt.

Ebenso kann die Empfangseinheit grundsätzlich bekannte Licht- oder Strahlungsdetektoren aufweisen. Insbesondere werden Halbleiter-Photodetektoren eingesetzt.

In besonders vorteilhafter Weise können mit optischen Kupplungen, die gemäß dem oben beschriebenen Prägeverfahren hergestellt sind, bei elektrooptischen Entfernungsmessgeräten die analogen Lichtsignale geleitet und gegebenenfalls manipuliert werden.

Grundsätzlich können an die optische Kupplung beliebige optische Komponenten angeschlossen werden. Insbesondere können Strahlungsquellen, Detektoren und optische Fasern an die optischen Kupplungen angeschlossen werden.

Grundsätzlich ist eine Totalreflexion in den Lichtleitbereichen auch an einer Grenzfläche zu Luft möglich. Allerdings wäre eine so gebildete Oberfläche oder Grenzfläche verschmutzungsempfindlich.

Bei einer besonders bevorzugten Variante weist die optische Kupplung zum Bereitstellen einer definierten optischen Grenzfläche eine Abdeckung auf, welche die erste Formseite wenigstens teilweise abdeckt. Besonders zweckmäßig ist hierbei, wenn die Abdeckung zumindest die Lichtleitbereiche vollständig abdeckt, um diese vor Verschmutzungen, über welche Licht ausgekoppelt werden kann, zu schützen. Durch diese Abdeckung wird demgemäß sowohl ein mechanischer als auch ein optischer Schutz bereitgestellt.

Grundsätzlich kann der Kupplungskörper eine erste Halbschale aufweisen, an welcher die erste Formseite gebildet ist, und darüber hinaus eine zweite Halbschale, durch welche die Abdeckung gebildet ist.

Bei einer besonders bevorzugten Variante ist die Abdeckung durch eine auf die erste Formseite aufgebrachte, insbesondere aufgeklebte Folie gebildet.

Bei einem besonders bevorzugten Ausführungsbeispiel des erfindungsgemäßen optischen Sensors ist in die zweite Halbschale an einer zweiten Formseite ein zweites Vertiefungsprofil eingeprägt. Grundsätzlich besteht im Hinblick auf dieses zweite Vertiefungsprofil in der zweiten Halbschale weitestgehende Gestaltungsfreiheit, so dass die Variabilität der Strahlformung durch diese Maßnahme noch gesteigert werden kann.

Bei einer besonders bevorzugten Variante entspricht das zweite Vertiefungsprofil spiegelbildlich dem ersten Vertiefungsprofil. Die Strahlquerschnitte der Lichtleitbereiche setzen sich somit aus dem ersten und dem zweiten Vertiefungsprofil zusammen. Prinzipiell ist an das Material der ersten Halbschale und der zweiten Halbschale von der thermischen Verformbarkeit abgesehen, keine weitere Anforderung gestellt.

Besonders bevorzugt sind die erste Halbschale und/oder die zweite Halbschale jedoch aus einem transparenten ersten Kunststoffmaterial gebildet. Beispielsweise können die erste Halbschale und/oder die zweite Halbschale aus PMMA gebildet sein.

Grundsätzlich kann die zweite Halbschale auch aus einem anderen Material als die erste Halbschale geformt sein. Besonders bevorzugt sind jedoch beide Halbschalen aus demselben Material gefertigt.

Soweit die erste und/oder die zweite Halbschale aus einem transparenten Kunststoffmaterial gefertigt ist, ist im Hinblick auf die Lichtleiteigenschaften der Lichtleitbereiche besonders bevorzugt, wenn das zweite transparente Kunststoffmaterial, mit welchem das erste Vertiefungsprofil und das zweite Vertiefungsprofil wenigstens teilweise verfüllt werden, einen geringeren Brechungsindex aufweist als das erste transparente Kunststoffmaterial, aus welchem die erste Halbschale und/oder die zweite Halbschale gebildet sind.

Bei weiteren zweckmäßigen Varianten des erfindungsgemäßen optischen Sensors ist in dem Kupplungskörper mindestens eine Aufnahme für eine anzuschließende Lichtleitfaser gebildet. Sofern die optische Kupplung in einem Entfernungsmessgerät nach dem Laufzeitprinzip eingesetzt wird, ist bevorzugt mindestens eine Aufnahme für eine Messfaser und eine Referenzfaser vorhanden.

Entsprechend ist zweckmäßig an einem Einkoppelende der optischen Kupplung mindestens eine Aufnahme für eine anzuschließende Laserdiode gebildet.

Die Aufnahmen für anzuschließende Lichtleitfasern oder anzuschließende Laserdioden können dabei vorteilhaft durch das erste Vertiefungsprofil und/oder das zweite Vertiefungsprofil gebildet sein. Weitere Fertigungsschritte sind dann nicht notwendig.

Für den Einsatz der optischen Kupplung in einem Entfernungsmessgerät nach dem Laufzeitprinzip ist weiterhin bevorzugt, wenn der Lichtleitbereich oder die Lichtleitbereiche mindestens eine Verzweigung zum Teilen der Laserstrahlen oder zum Einkoppeln der Strahlung einer zweiten Strahlungsquelle aufweisen.

Das oben beschriebene Verfahren ermöglicht darüber hinaus die Herstellung von optischen Kupplungen, bei denen der Lichtleitbereich oder die Lichtleitbereiche in ihrer Erstreckungsrichtung einen gezielt angepassten, insbesondere veränderlichen, Querschnitt aufweisen. Hierbei handelt es sich um eine besonders wichtige Eigenschaft der optischen Kupplung und des oben beschriebenen Verfahrens, da durch dieses Merkmal die Variabilität und Anpassbarkeit der optischen Strahlführung erheblich gesteigert wird.

Im Hinblick auf die tatsächlich eingesetzten Strahlquerschnitte besteht denkbar große Freiheit. Beispielsweise können die Lichtleitbereiche wenigstens teilweise einen runden oder elliptischen Querschnitt aufweisen. Ebenso können, beispielsweise im Hinblick auf die im Allgemeinen rechteckige Abstrahlfläche einer Laserdiode, wenigstens teilweise quadratische oder rechteckige Querschnitte der Lichtleitbereiche zweckmäßig sein.

Statt eines rechteckigen Querschnitts in einem Anschlussbereich einer Laserdiode kann aber auch ein elliptischer Querschnitt von Vorteil sein.

In den Anschlussbereichen für die anzuschließenden Lichtleitfasern weisen die Lichtleitbereiche im Hinblick auf eine möglichst effektive Auskopplung oder Einkopplung der Strahlung zweckmäßig einen runden oder quadratischen Querschnitt auf.

Im Hinblick auf die im Allgemeinen deutlich kleineren Querschnitte der eingesetzten Lichtleitfasern im Vergleich zu den Abstrahlflächen von typischerweise verwendeten Laserdioden ist außerdem bevorzugt, wenn sich der Lichtleitbereich oder die Lichtleitbereiche mit zunehmender Entfernung von einem Einkoppelende verjüngt oder verjüngen.

Insbesondere sind erfindungsgemäß Sensoren mit optischen Kupplungen möglich, bei denen sich die Ausdehnung eines Lichtleitbereichs in seiner Erstreckungsrichtung in beiden zur Erstreckungsrichtung querstehenden Raumrichtungen ändert.

Bei einer weiteren bevorzugten Variante der Erfindung ist außerdem zur Aufnahme einer Laserdiode im Bereich mindestens eines Einkoppelendes ein Kupplungselement vorgesehen. Hierbei kann es sich um ein einfaches Spritzgussteil handeln, welches mit dem Kupplungskörper verbunden, beispielsweise darin eingerastet wird, und in dem eine anzuschließende Laserdiode formschlüssig aufgenommen werden kann.

Zweckmäßig kann in ein solches Kupplungselement bereits eine Linse, insbesondere eine Zylinderlinse, integriert sein, mit welcher die aus der Laserdiode austretende Strahlung geeignet auf das Einkoppelende des entsprechenden Lichtleitbereichs in dem Kupplungskörper geleitet und gerichtet werden kann. Auf diese Weise können Koppelverluste reduziert werden.

Mit Hilfe einer Zylinderlinse kann eine vertikale Überstrahlung einer Stirnfläche eines Lichtleitbereichs reduziert werden und außerdem kann die Strahldivergenz verkleinert werden, so dass diese möglichst kleiner ist als ein Akzeptanzwinkel des Lichtleitbereichs.

In diesem Zusammenhang besteht eine weitere Verbesserung darin, dass das genannte Kupplungselement eine Verdrehsicherung für die Laserdiode aufweist. Hierbei kann es sich in einer einfachen Variante um eine nichtrotationssymmetrische Ausbildung der Aufnahme für die Laserdiode im Kupplungskörper handeln, so dass ein Verdrehen der in den Kupplungskörper eingesetzten Laserdiode nicht möglich ist. Auch hierdurch wird insgesamt die Zuverlässigkeit des Aufbaus erhöht. Bevorzugt kann dieses Kupplungselement selbst bezüglich des Kupplungselements justierbar sein, beispielsweise mit Hilfe von Stellschrauben. Alternativ kann dieses Kupplungselement mit dem Kupplungskörper verklebt sein, wobei vor dem Aushärten der Klebeverbindung eine Justage durchgeführt werden muss.

Bei einer weiteren bevorzugten Ausgestaltung des erfindungsgemäßen optischen Sensors ist an mindestens einem Lichtleitbereich ein Heizelement, insbesondere ein Widerstandsdraht, vorgesehen, mit welchem eine Abschwächung des zu leitenden Lichts bis zu 30 dB ohne mechanischen Abschwächer erfolgen kann.

Erfindungsgemäß wurde erkannt, dass sich die nach dem oben beschriebenen Verfahren hergestellten optischen Kupplungen besonders gut zum Mischen von Lichtmoden der Laserstrahlung verwenden lassen. Durch mehrfache interne Reflexionen an den Grenzflächen der Lichtleitbereiche an oder in dem Kupplungskörper wird die Strahlungsverteilung besonders schnell, typischerweise bereits nach etwa 4 cm hinreichend gut über den Querschnitt der Lichtleitbereiche homogenisiert.

Dies ermöglicht in vorteilhafter Weise die Verwendung der optischen Kupplung zum Leiten und Auftrennen von kurzen Lichtpulsen, wobei diese Lichtpulse durch die erzielte Modenmischung in ihrer Pulshöhe eventuell unterschiedlich sind, in ihrer Form ansonsten jedoch sehr weitgehend übereinstimmen.

Beispielsweise kann die optische Kupplung als optische Kopplungsvorrichtung zwischen mindestens einem Laser und einer weiteren optischen Komponente, insbesondere mindestens einer Lichtleitfaser, verwendet werden.

Die genannten positiven Merkmale machen die optische Kupplung in besonderer Weise geeignet zum Leiten von analogen Lichtsignalen bei elektrooptischen Entfernungsmessgeräten, insbesondere nach dem Laufzeitprinzip, inbesondere der in WO 2008/003481 A1 und WO 2008/003482 A1 beschriebenen Art. Der Inhalt der Schriften WO 2008/003481 A1 und WO 2008/003482 A1 wird hiermit in die vorliegende Anmeldung integriert. Der Offenbarungsgehalt der vorliegenden Anmeldung soll demgemäß auch Merkmalskombinationen der in WO 2008/003481 A1 und WO 2008/003482 A1 beschriebenen Gegenstände mit den hier beschriebenen Gegenständen umfassen.

Besonders bevorzugt werden in erfindungsgemäßen Sensoren analoge Lichtpulse in Mess- und Referenzpulse aufgeteilt.

Eine besondere Bedeutung für die Effektivität der Einkopplung von Licht in die Lichtleitbereiche oder der Auskopplung von Licht aus den Lichtleitbereichen spielt die numerische Apertur im Bereich des Einkoppel- oder Auskoppelendes der Lichtleitbereiche. Mit dem oben beschriebenen Herstellungsverfahren können numerische Aperturen erreicht werden, die größer sind als 0,30. Gute Resultate werden aber bereits mit numerischen Aperturen erreicht, die größer als 0,25 oder 0,28 sind.

Weitere Vorteile und Merkmale der vorliegenden Erfindung werden nachstehend mit Bezug auf die beigefügten Figuren beschrieben.

Hierin zeigt:
- Fig. 1: eine perspektivische schematische Ansicht eines ersten Ausführungsbei- spiels einer optischen Kupplung für den Einsatz bei einem erfindungsge- mäßen optischen Sensor;
- Fig. 2: eine schematische perspektivische Teilansicht der optischen Kupplung aus Fig. 1;
- Fig. 3: eine weitere schematische perspektivische Teilansicht der optischen Kupp- lung aus Fig. 1;
- Fig. 4: eine Schnittansicht eines im Vergleich zu Fig. 1 leicht abgewandelten Bei- spiels einer optischen Kupplung;
- Fig. 5: eine schematische perspektivische Teilansicht eines weiteren Ausführungs- beispiels einer optischen Kupplung;
- Fig. 6: eine schematische perspektivische Teilansicht des Ausführungsbeispiels aus Fig. 5; und
- Fig. 7: eine schematische Ansicht eines Ausführungsbeispiels eines erfindungs- gemäßen optischen Sensors.

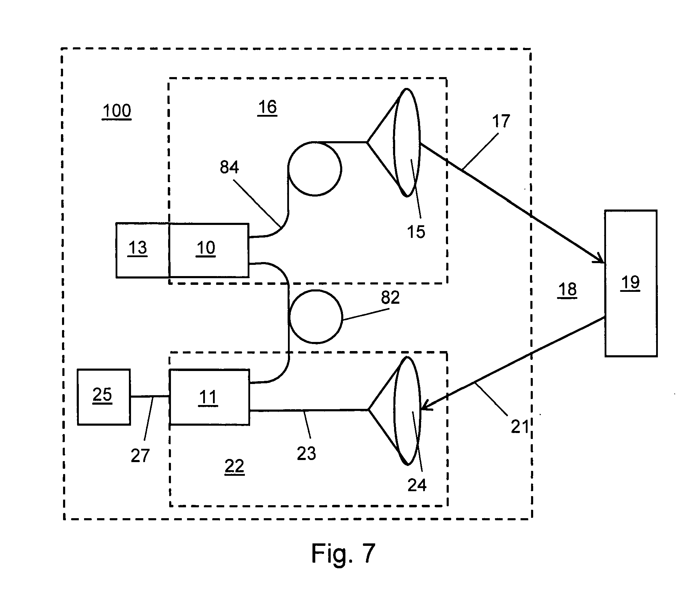

Ein Ausführungsbeispiel eines erfindungsgemäßen optischen Sensors 100 wird mit Bezug auf Fig. 7 erläutert. Bei dem dort schematisch gezeigten optischen Sensor 100 handelt es sich um ein elektrooptisches Entfernungsmessgerät nach dem Laufzeitprinzip.

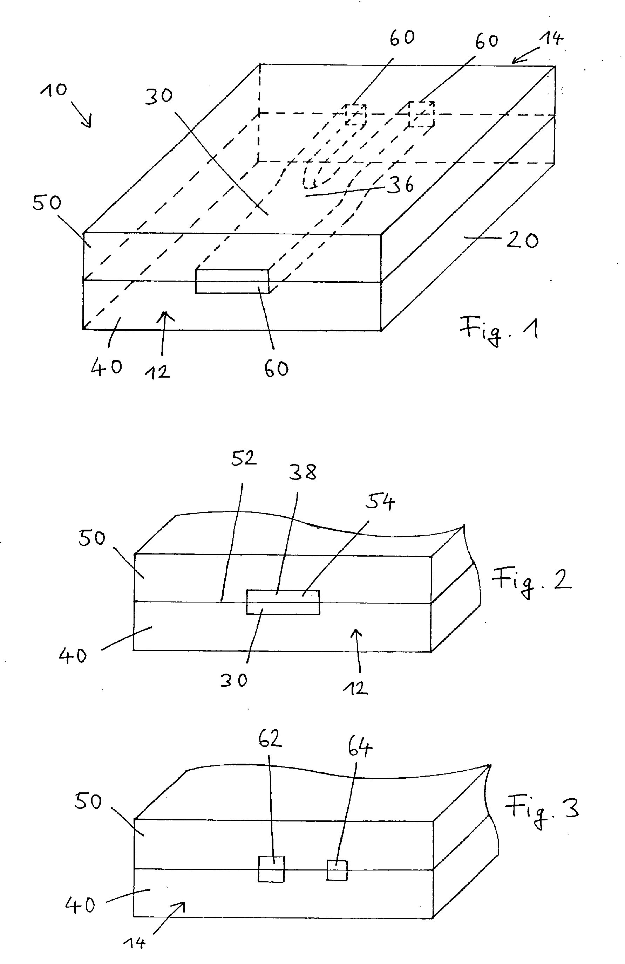

Eine Sendeeinheit 13, beispielsweise ein Laser, ist dort an eine optische Kupplung 10 der in den Figuren 1 bis 6 gezeigten Art angeschlossen. Von der Sendeeinheit 13 ausgesandtes Licht wird von der Kupplung 10 auf eine Messfaser 84 und eine Referenzfaser 82 aufgeteilt. Aus der Messfaser 84 austretendes Licht wird auf eine hier schematisch dargestellte Optik 15 gestrahlt, welche das Licht 17 in einen Überwachungsbereich 18 lenkt. Durch die optische Kupplung 10, die Messfaser 84 und die Optik 15 wird eine Sendeoptik 16 gebildet, welche das Licht 17 von der Sendeeinheit 13 in den Überwachungsbereich 18 leitet.

Von einem Objekt 19 im Überwachungsbereich 18 wird Licht 21 zurückreflektiert und/oder zurückgestreut und gelangt sodann auf eine hier schematisch dargestellte Optik 24. Das Licht 21 wird im Anschluss in eine Glasfaser 23 eingekoppelt, welche mit einer weiteren optischen Kupplung 11 verbunden ist. Ein Ausgang dieser optischen Kupplung 11 ist über eine weitere optische Faser 27 mit einer durch einen Photodetektor gebildeten Empfangseinheit 25 verbunden. Außerdem ist mit der optischen Kupplung 11 auch ein weiterer Anschluss der optischen Faser 24 verbunden. Durch die Optik 24, die optischen Fasern 23, 27 und die optische Kupplung 11 wird demgemäß eine Empfangsoptik 22 gebildet, welche das aus dem Überwachungsbereich 18 kommende Licht 21 auf die Empfangseinheit 25 leitet. Die optische Kupplung 11 dient demgemäß zum Leiten sowohl von Referenzpulsen über die Glasfaser 24 auf die Empfangseinheit 25 als auch von Messpulsen über die optische Faser 23 auf die Empfangseinheit 25.

In besonders vorteilhafter Weise können mit Hilfe der optischen Kupplung 10 von der Sendeeinheit 13 gelieferte Pulse in Messpulse und Referenzpulse aufgeteilt werden, welche sich aufgrund der besonders effektiven Modenmischung in der optischen Kupplung 10 im Wesentlichen nur in ihrer Höhe, nicht aber in ihrer Form unterscheiden.

Ein erstes Ausführungsbeispiel einer optischen Kupplung 10, wie sie bei einem erfindungsgemäßen optischen Sensor zum Einsatz kommt, wird mit Bezug auf die Figuren 1 bis 4 erläutert. Äquivalente Komponenten sind in allen Figuren mit denselben Bezugszeichen versehen.

Die optische Kupplung 10 weist als wesentlichen Bestandteil einen Kupplungskörper 20 einer ersten Halbschale 40 und einer zweiten Halbschale 50 auf. Die erste Halbschale 40 und die zweite Halbschale 50 sind jeweils aus einem PMMA-Grundmaterial, also einem transparenten thermoplastischen Material, gefertigt.

Eine Innenseite oder Formseite 42 der ersten Halbschale weist ein Vertiefungsprofil 44 auf, welches dort mit Hilfe des oben beschriebenen Verfahrens und einem geeigneten Prägewerkzeug thermisch eingeprägt wurde.

An einer Innenseite oder Formseite 52 der zweiten Halbschale ist ein spiegelbildlich gleiches Vertiefungsprofil 54 thermisch eingeprägt.

Durch die Vertiefungsprofile 44, 54 wird eine Lichtleitstruktur definiert. Die entstandenen Hohlräume werden mindestens teilweise, bevorzugt aber vollständig, mit einem niedriger brechenden Kunststoff verfüllt. Zur Fertigstellung der optischen Kupplung werden sodann die erste Halbschale 40 und die zweite Halbschale 50 zusammengesetzt. Zuvor können eventuell anzuschließende Lichtleiterfasern bereits in durch die Vertiefungsprofile 44, 54 gegebene Aufnahmebereiche eingelegt werden. Dies kann grundsätzlich aber auch erst nach dem Zusammensetzen der Halbschalen 40, 50 erfolgen.

Je nach Herstellverfahren für das eingesetzte Prägewerkzeug liegen die erzielbaren Rauhigkeiten im Bereich von Ra = 20nm bis Ra = 75nm. Damit sind Genauigkeiten im Bereich von 1µm zu realisieren.

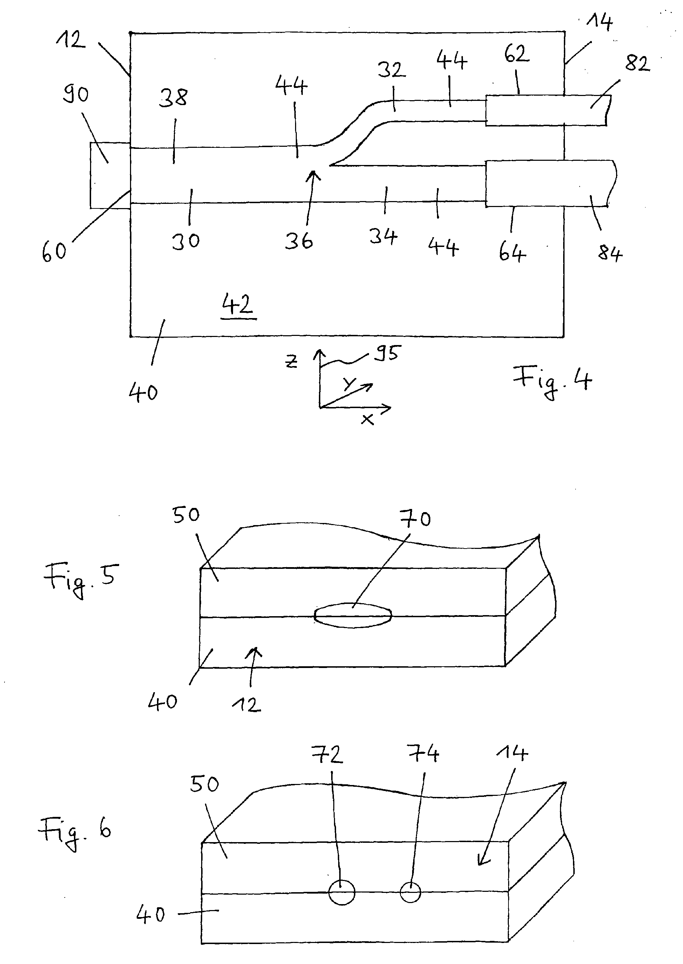

An einer ersten Stirnseite der optischen Kupplung 10, die auch als Einkoppelende 12 bezeichnet werden kann, ist ein Anschlussbereich 60, beispielsweise für eine Laserdiode 90 vorgesehen. Das in den Figuren 1 und 4 gezeigte Ausführungsbeispiel weist einen Lichtleitbereich 30 mit einer Verzweigung 36 auf. Von einem Teilbereich 38 des Lichtleitbereichs 30, in welchen Strahlung einer Laserdiode 90 eingekoppelt wird, teilt sich demgemäß der Lichtleitbereich 30 an der Verzweigung 36 in die Lichtleiter 32, 34 auf. Der Lichtleitbereich 30 verjüngt sich vom Einkoppelende zum Auskoppelende in der in Fig. 4 gezeigten Zeichenebene, d.h. die Ausdehnung der Lichtleiter 32, 34 in z-Richtung ist kleiner als diejenige des Bereichs 38. Darüber hinaus verjüngt sich der Lichtleitbereich 30 aber auch in y-Richtung, also in Richtung senkrecht zur Zeichenebene. Die Raumdichtungen sind in Fig. 4 durch ein Koordinatensystem 95 eingedeutet.

Durch diese Strukturen, die auch als zweidimensionale Taper bezeichnet werden, kann eine deutlich höhere Einkoppeleffizienz und insbesondere eine variable Strahlform realisiert werden. Diese zweidimensionalen Taper können insbesondere mit dem oben beschriebenen Verfahren besonders gut und kostengünstig hergestellt werden.

Bei dem in den Figuren 1 bis 4 dargestellten Ausführungsbeispiel weist der Bereich 38 des Lichtleitbereichs 30 einen im Wesentlichen rechteckigen Querschnitt auf. Dies ist insbesondere aus den Figuren 1 und 2 ersichtlich. Am Auskoppelende 14 weisen die Aufnahmebereiche 62, 64 für die dort einzuführenden oder einzulegenden optischen Fasern 82, 84 einen im Wesentlichen quadratischen Querschnitt auf, wobei die Aufnahme 64, die eine Messfaser 84 eines erfindungsgemäßen elektrooptischen Entfernungsmessgeräts nach dem Laufzeitprinzip aufnehmen kann, einen größeren Querschnitt aufweist als die Aufnahme 62, die zum Aufnehmen einer Referenzfaser 82 dient. Diese relativen Größenverhältnisse sind sehr schematisch in den Abbildungen angedeutet.

Die Seitenlängen der rechteckigen Eintrittsfläche und der quadratischen Austrittsflächen betragen größenordnungsmäßig einige 0,1 mm.

Bei den Aufnahmen 62, 64 handelt es sich im Wesentlichen um grabenförmige Strukturen oder Vertiefungen, in welchen die Fasern, also die Referenzfaser 82 und die Messfaser 84, justagefrei positioniert werden können.

Das in den Figuren 1 bis 4 dargestellte Ausführungsbeispiel dient demgemäß als optischer Strahlteiler für ein elektrooptisches Entfernungsmessgerät nach dem Laufzeitprinzip. Dabei wird ein in den Teilbereich 38 des Lichtleitbereichs 30 eingekoppelter optischer Messpuls über die Verzweigung 36 in einen Mess- und einen Referenzpuls aufgeteilt.

Eine zweite Variante einer optischen Kupplung 10 ist in den Figuren 5 und 6 gezeigt. Fig. 5 ist eine Ansicht des Einkoppelendes 12 der optischen Kupplung 10. Fig. 6 zeigt das Auskoppelende 14 dieser optischen Kupplung 10.

Der Verlauf der Lichtleitbereiche entspricht bei dem Ausführungsbeispiel aus den Figuren 5 und 6 im Wesentlichen der in Fig. 4 für das erste Ausführungsbeispiel gezeigten Situation. Unterschiede bestehen jedoch in der konkreten Ausformung der Strahlquerschnitte. Während die Strahlquerschnitte bei dem Ausführungsbeispiel der Figuren 1 bis 4 rechteckig und quadratisch sind, weist bei der Variante aus den Figuren 5 und 6 ein Einkoppelbereich 70 einen elliptischen Strahlquerschnitt auf und die entsprechenden Auskoppelbereiche 72, 74 sind im Querschnitt kreisförmig. Vergleichbar der in Fig. 3 gezeigten Situation ist dabei der Querschnitt des Auskoppelbereichs 74 kleiner als derjenige des Auskoppelbereichs 72.

Die räumlichen Dimensionen der Querschnitte betragen wiederum einige 0,1 mm.

Mit dem in den Figuren gezeigten optischen Kupplungen 10 können beispielsweise etwa 50% einer eingestrahlten Laserstrahlung in den Hauptkanal, also in die Messfaser 84 eingekoppelt werden. In die Referenzfaser 82 werden beispielsweise nur einige Prozent eingekoppelt. Der Brechungsindex des Materials, mit welchem die Vertiefungsprofil 44, 45 verfüllt werden, kann beispielsweise n = 1,5 betragen. Der Brechungsindex des PMMA-Materials der Halbschalen 40, 50 ist geringer und kann zum Beispiel etwa n = 1,47 betragen. Die Verzweigung 36 ist vergleichsweise scharf ausgeführt. Eine Verrundung führt zu einer Verschlechterung der Referenzauskoppelung.

Die Messfaser 84 und die Referenzfaser 82 stecken beispielsweise zwei Millimeter tief in dem Kupplungskörper 20.

Mit der vorliegenden Erfindung wird ein neuartiger optischer Sensor mit einer optischen Kupplung bereitgestellt. Die hier beschriebenen optischen Kupplungen eignen sich besonders für Anwendungen in der Optosensorik allgemein und insbesondere für solche Anwendungen, bei denen eine gezielte Strahlformung notwendig ist. Besondere Vorteile können hier bei sehr kleinen Strukturen erzielt werden, wenn bisher bekannte Werkzeugtechnologien, wie Spritzguss, nicht zum Erfolg führen. Insbesondere können diese optischen Kupplungen erfindungsgemäß für elektrooptische Entfernungsmessgeräte nach dem Laufzeitprinzip eingesetzt werden, bei denen zur Bereitstellung vergleichbarer optischer Pulse eine Modenmischung erfolgen soll. Die optische Kupplung kann erfindungsgemäß deshalb insbesondere als optischer Strahlteiler oder Splitter dienen. Im Vergleich zu bisher bekannten Technologien wie optischen Leiterplatten oder einfacher Stumpfkopplung von zwei Fasern nebeneinander können mit der Erfindung deutlich verbesserte Koppeleffizienzen, eine erheblich verbesserte Durchmischung der einzelnen Moden und außerdem eine deutlich verbesserte Zuverlässigkeit der Herstellung erzielt werden.

Allgemein ermöglicht bei den erfindungsgemäßen Sensoren eine Strahlformung in zwei Dimensionen in Bereichen unterhalb von 10 µm.

Für die Entfernungsmessung nach dem Lichtlaufzeitprinzip ist neben der hohen Einkoppeleffizienz und der sehr guten homogenen Modenmischung der Laserdiodenstrahlung auch die gute Auskoppeleffizienz des Referenzkanals nach der Modenmischung bedeutsam. Im Vergleich zur Technologie von optischen Leiterplatten können außerdem höhere numerische Aperturen beim Ein- und Auskoppeln erzielt werden.

Die Technologie des Heißprägens ermöglicht insgesamt dreidimensionale Strahlverläufe innerhalb des Kupplungskörpers und durch eine große Wahlfreiheit der Materialpaarungen können hohe numerische Aperturen erzielt werden. Das allgemeine Ziel bei den genannten Entfernungsmessgeräten nach dem Laufzeitprinzip, einen möglichst hohen Anteil des Lichts in eine Messfaser einzukoppeln und einen kleinen definierten Teil in eine, insbesondere kürzere, Referenzfaser, wird demgemäß bei der optischen Kupplung besonders zuverlässig realisiert. Für beide Fasern kann die gleichen Stufenindexfaser mit beispielsweise 100 µm Durchmesser verwendet werden.

Insbesondere kann durch die hier beschriebenen optischen Kupplungen ein Kunststoffteil bereitgestellt werden, bei dem beide Fasern einfach und insbesondere ohne Justage gekoppelt werden können. Grundsätzlich ist auch möglich, dass auch die Laserdiode ohne aktive Justage mit der optischen Kupplung verbunden wird. Da mechanische Toleranzen von Laserdioden im Allgemeinen vergleichsweise groß sind, ist aber genauso möglich, für die aktive Justage einer Laserdiode geeignete Justagemittel vorzusehen. Die hier beschriebenen optischen Kupplungen können grundsätzlich in einem großen Temperaturbereich beispielsweise von -20 bis +75°C betrieben werden.

## Patentansprüche

1. Optischer Sensor zum Nachweis von Objekten in einem Überwachungsbereich (18),
mit einer Sendeeinheit (13) zum Aussenden von Licht (17),
mit einer Empfangseinheit (25) zum Empfangen von Licht (21),
mit einer Sendeoptik (16) zum Leiten von Licht (17) in den Überwachungsbereich (18),
mit einer Empfangsoptik (22) zum Leiten von aus dem Überwachungsbereich (18) kommendem Licht (21) auf die Empfangseinheit (25),
**dadurch gekennzeichnet,**
**dass** die Sendeoptik (16) und/oder die Empfangsoptik (22) zum Verbinden von optischen Komponenten mindestens eine optische Kupplung (10) aufweist, dass die optische Kupplung (10) einen aus einem ersten Kunststoffmaterial gebildeten Kupplungskörper (20) aufweist, an oder in dem mindestens ein Lichtleitbereich (30) und Anschlussbereiche (60) für anzuschließende Komponenten (82, 84, 90) gebildet sind, und
**dass** in den Kupplungskörper (20) an einer ersten Formseite (42) ein erstes Vertiefungsprofil (44) eingeprägt ist, welches zum Bilden der Lichtleitbereiche (30) wenigstens teilweise mit einem transparenten zweiten Kunststoffmaterial verfüllt ist.

2. Optischer Sensor nach Anspruch 1,
**dadurch gekennzeichnet,**
**dass** die optische Kupplung (10) zum Bereitstellen einer definierten optischen Grenzfläche eine Abdeckung, insbesondere eine auf die erste Formseite (42) aufgeklebte Folie, aufweist, welche die erste Formseite (42) wenigstens teilweise abdeckt.

3. Optischer Sensor nach Anspruch 2,
**dadurch gekennzeichnet,**
**dass** der Kupplungskörper (20) eine erste Halbschale (40) aufweist, an welcher die erste Formseite (42) gebildet ist, und eine zweite Halbschale(50), durch welche die Abdeckung gebildet ist.

4. Optischer Sensor nach Anspruch 3,
**dadurch gekennzeichnet,**
**dass** in die zweite Halbschale (50) an einer zweiten Formseite (52) ein zweites Vertiefungsprofil (54) eingeprägt ist.

5. Optischer Sensor nach Anspruch 4,
**dadurch gekennzeichnet,**
**dass** das zweite Vertiefungsprofil (54) dem ersten Vertiefungsprofil (44) spiegelbildlich entspricht.

6. Optischer Sensor nach einem der Ansprüche 3 bis 5,
**dadurch gekennzeichnet,**
**dass** die zweite Halbschale (50) aus demselben Material wie die erste Halbschale (40) gebildet ist.

7. Optischer Sensor nach einem der Ansprüche 3 bis 6,
**dadurch gekennzeichnet,**
**dass** die erste Halbschale (40) und/oder die zweite Halbschale (50) aus einem transparenten ersten Kunststoffmaterial, insbesondere aus PMMA, gebildet ist.

8. Optischer Sensor nach einem der Ansprüche 3 bis 7,
**dadurch gekennzeichnet,**
**dass** das zweite transparente Kunststoffmaterial, mit welchem das erste Vertiefungsprofil (44) und das zweite Vertiefungsprofil (54) wenigstens teilweise verfüllt sind, einen geringeren Brechungsindex aufweist als das erste transparente Kunststoffmaterial, aus welchem die erste Halbschale (40) und/oder die zweite Halbschale (50) gebildet ist.

9. Optischer Sensor nach einem der Ansprüche 1 bis 8,
**dadurch gekennzeichnet,**
**dass** in dem Kupplungskörper (20) mindestens eine Aufnahme (62, 64) für eine anzuschließende Lichtleitfaser (82, 84) gebildet ist und/oder dass in dem Kupplungskörper (20) mindestens eine Aufnahme für eine Messfaser (84) und eine Referenzfaser (82) vorhanden ist und/oder dass in dem Kupplungskörper (20) mindestens eine Aufnahme für eine anzuschließende Laserdiode (90) gebildet ist.

10. Optischer Sensor nach einem der Ansprüche 1 bis 9,
**dadurch gekennzeichnet,**
**dass** die Aufnahmen für anzuschließende Lichtleitfasern (82, 84) oder anzuschließende Laserdioden (90) durch das erste Vertiefungsprofil (44) und/oder das zweite Vertiefungsprofil (54) gebildet ist oder sind.

11. Optischer Sensor nach einem der Ansprüche 1 bis 10,
**dadurch gekennzeichnet,**
**dass** der Lichtleitbereich (30) oder die Lichtleitbereiche mindestens eine Verzweigung (36) zum Teilen der Laserstrahlung oder zum Einkoppeln der Strahlung einer zweiten Strahlungsquelle aufweisen.

12. Optischer Sensor nach einem der Ansprüche 1 bis 11,
**dadurch gekennzeichnet,**
**dass** der Lichtleitbereich (30) oder die Lichtleitbereiche in ihrer Erstreckungsrichtung einen gezielt angepassten, insbesondere veränderlichen, Querschnitt aufweist oder aufweisen.

13. Optischer Sensor nach einem der Ansprüche 1 bis 12,
**dadurch gekennzeichnet,**
**dass** die Lichtleitbereiche (30) wenigstens teilweise einen runden oder elliptischen Querschnitt aufweisen und/oder
**dass** die Lichtleitbereiche (30) wenigstens teilweise einen quadratischen oder rechteckigen Querschnitt aufweisen.

14. Optischer Sensor nach einem der Ansprüche 1 bis 13,
**dadurch gekennzeichnet,**
**dass** ein Lichtleitbereich (30) in einem Anschlussbereich (60) für eine Laserdiode einen rechteckigen oder elliptischen Querschnitt aufweist und/oder dass ein Lichtleitbereich (30) in einem Anschlussbereich (60) für eine Lichtleitfaser (82, 84) einen runden oder quadratischen Querschnitt aufweist.

15. Optischer Sensor nach einem der Ansprüche 1 bis 14,
**dadurch gekennzeichnet,**
**dass** sich die Ausdehnung eines Lichtleitbereichs (30) in seiner Erstreckungsrichtung in beiden zur Erstreckungsrichtung querstehenden Raumrichtungen ändert.

16. Optischer Sensor nach einem der Ansprüche 1 bis 15,
**dadurch gekennzeichnet,**
**dass** zum Anschließen einer Laserdiode (90) mindestens ein Kupplungselement vorgesehen ist und/oder
**dass** in das Kupplungselement eine Linse, insbesondere eine Zylinderlinse, integriert ist und/oder
**dass** das Kupplungselement eine Verdrehsicherung für die Laserdiode (90) aufweist.

17. Optischer Sensor nach einem der Ansprüche 1 bis 16,
**dadurch gekennzeichnet,**
**dass** an mindestens einem der Lichtleitbereiche (30) ein Heizelement vorgesehen ist.

18. Optischer Sensor nach einem der Ansprüche 1 bis 17,
**dadurch gekennzeichnet,**
**dass** der der Lichtleitbereich (30) oder die Lichtleitbereiche zwischen dem Einkoppelende (12) und einer Verzweigung (36) mindestens 4 cm lang ist oder sind.

19. Optischer Sensor nach einem der Ansprüche 1 bis 18,
welcher ein elektrooptisches Entfernungsmessgerät nach dem Laufzeitprinzip ist.
